(19) Europäisches Patentamt
European Patent Office
Office européen des brevets

(11) Publication number : **0 355 738 B1**

(12) # EUROPEAN PATENT SPECIFICATION

(45) Date of publication of patent specification : **02.11.94 Bulletin 94/44**

(51) Int. Cl.⁵ : **G01N 21/64,** G01N 35/00

(21) Application number : **89115264.7**

(22) Date of filing : **18.08.89**

(54) **Fluorophotometer for use in automatic equipment of chemical analysis for measuring the intensity of fluorescence in the automatic equipment.**

(30) Priority : **26.08.88 JP 210747/88**

(43) Date of publication of application : **28.02.90 Bulletin 90/09**

(45) Publication of the grant of the patent : **02.11.94 Bulletin 94/44**

(84) Designated Contracting States : **DE FR GB**

(56) References cited :
**EP-A- 0 197 425**
**EP-A- 0 198 513**
**JP-A- 6 396 540**
**JP-A-63 008 539**
**US-A- 3 551 839**
**US-A- 4 291 230**
**US-A- 4 622 468**
**JOURNAL OF THE AUDIO ENGINEERING SOCIETY, vol. 26, no. 10, October 1978, pages739-771; B.A. BLESSER: "Digitization of audio: A comprehensive examination of theory, implementation, and current practice"**

(73) Proprietor : **HITACHI, LTD.**
**6, Kanda Surugadai 4-chome**
**Chiyoda-ku, Tokyo 100 (JP)**

(72) Inventor : **Hashimoto, Hiroshi**
**1616, Toyooka**
**Tokaimura**
**Naka-gun Ibaraki-ken (JP)**
Inventor : **Umetsu, Hiroshi**
**2153-27, Tsuda**
**Katsuta-shi (JP)**
Inventor : **Imai, Kyoko**
**Tsukubadai Apartment 1-103**
**663, Ichige**
**Katsuta-shi (JP)**
Inventor : **Kawase, Masumi (née Suzuki)**
**RIO. 5-102**
**9-4-20, Suzuya**
**Yono-shi (JP)**

(74) Representative : **Altenburg, Udo, Dipl.-Phys. et al**
**Patent- und Rechtsanwälte**
**Bardehle . Pagenberg . Dost . Altenburg . Frohwitter . Geissler & Partner**
**Galileiplatz 1**
**D-81679 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 355 738 B1

## Description

## BACKGROUND OF THE INVENTION

The present invention relates to a fluorophotometer for use in automatic equipment of chemical analysis and a method of measuring the intensity of fluorescence in the above equipment, and more particularly to an automatic fluorophotometer used as the detector of automatic equipment of chemical analysis for clinical examination and a method of automatically measuring the intensity of fluorescence in the automatic equipment.

A fluorophotometer is frequently used for determining trace components in blood such as a pathogonic organism, medical substances, hormone, and an immune globulin. In the fluorophotometer, a sample to be inspected is irradiated with exciting light, and secondary light emitted from the to-be-inspected sample is measured. Accordingly, in a case where the to-be-inspected sample is a liquid sample, weak fluorescence is emitted from the sample. Hence, it is necessary to use a special photodetector and a special light source. Such a fluorophotometer is inferior in stability to an absorption spectrophotometer. Hence, as shown in Japanese patent applications JP-A-59-125,043, JP-A-62-80,552 and JP-A-63-8,539, in addition to a photodetector disposed in an optical system on the fluorescence side, a photodetector for minitoring exciting light is disposed in an optical system on the exciting light side, to improve the stability of measured data. Specifically, in the Japanese patent application JP-A-63-8,539, a shutter is disposed on the optical path between a spectroscope for generating exciting light and a sample cell, and is made open only when fluorescence is measured. Thus, even when photochemical reaction is generated in a sample by the exciting light, fluorescence measurement can be made reproducibly.

However, the conventional fluorophotometer for use in automatic equipment of chemical analysis is high in noise level, and the drift of the fluorophotometer exerts a great influence upon measured values. Thus, it is impossible for the fluorophotometer to have satisfactory measuring accuracy. The drift of the fluorophotometer is mainly caused by the drift of a light source, the drift of dark current of a photomultiplier used as a photodetector, and the drift of offset current or voltage of a pre-amplifier. The drift of the light source can be corrected by a conventional method. That is, part of exciting light is monitored by a semiconductor detector small in drift, and a ratio of the output of the photomultiplier for measuring fluorescence to the output of the semiconductor detector is used as the intensity of fluorescence, to correct the influence of the drift of the light source on the measured intensity of fluorescence. However, the conventional method cannot correct the influence of the'drift of the dark current of the photomultiplier and the drift of the offset current or voltage of the pre-amplier on measured values.

Further, in a conventional fluorophotometer, a ratio of a maximum measurable concentration to a minimum measurable concentration is about one hundred. Accordingly, in a case where the content of a desired component is measured in a wider range, it is necessary to change the detection sensitivity of the fluorophotometer by varying a high voltage applied to the photomultiplier, and to make the measurement of fluorescence once more. That is, the measurement of fluorescence requires a cumbersome operation. It is very difficult to solve the above problem due to the narrow dynamic range of the fluorophotometer.

US-Patent 4,622,468 discloses a fluorescence intensity compensation method and device in which variations in the intensity of a light source and the sensitivity of a fluorescence detector photo-multiplier tube are simultaneously compensated by measuring intensities of the light source according to a determined formula.

The European Patent Application 0 198 513 discloses an analytical method and apparatus for determining fluorescence or phosphorescence, wherein a turntable holding a train of reaction containers thereon is continuously turned by one revolution plus an angle for a share of one container and then stopped. On the route of transfer of the reaction container, there are provided a light irradiation position and a light collection position.

It is an object of the present invention is provide a fluorophotometer for use in automatic equipment of chemical analysis which fluorophotometer is suited to automatically and continuously measure a multiplicity of liquid samples having reacted with a reagent.

It is another object of the present invention to provide a fluorophotometer for use in automatic equipment of chemical analysis which fluorophotometer can reduce the effect of the drift of a photodetector on measured values of fluorescence.

It is a further object of the present invention to provide a fluorophotometer for use in automatic equipment of chemical analysis which fluorophotometer and method can rapidly measure each of a multiplicity of liquid samples having reacted with a reagent, in a measurement range suited for the concentration level of each liquid sample.

According to the present invention, there is provided a fluorophotometer for use in automatic equipment of chemical analysis according to the claim. This fluorophotometer includes a shutter provided in an optical system on the exciting light side for blocking the optical path of exciting light, a shutter driving device for driving the shutter so that the shutter is kept at a state that the optical path of exciting light is blocked and then kept at a state that the optical path of exciting light is made open, each time a train of reaction vessels is intermittently moved, and a processor for storing a first output signal which is delivered from a photodetector for the detection of fluorescence in a period when the optical path of exciting light is blocked, and for correcting a second output signal which is delivered from the photodectector in a period when the optical path of exciting light is made open, by the first output signal.

In more detail, the first output signal which is obtained in a period when the optical path of exciting light is blocked, includes signal components due to the dark durrent of the photodetector, stray radiation, and the offset current or voltage of a pre-amplifier. When the first output signal which is obtained in a state that the optical path of exciting light, is stored in the processor prior to the measurement of fluorescence emitted from the liquid sample having reacted with a reagent, the first output signal can be subtracted from the second output signal which is obtained by the measurement of the fluorescence, to eliminate the influence of the drift of the fluorophotometer upon a measured value. The above processing is carried out in each measuring cycle, and hence the effect of the drift of the fluorophotometer on measured values is made very small. Incidentally, it is preferable to dispose the shutter between a light source and a spectroscope for exciting light.

Further, it is important to reduce the influence of the noise in a light source upon measured values. When the output signal of a semiconductor detector for detecting part of exciting light and the output signal of a photomultiplier for measuring the intensity of fluorescence are simultaneously applied to first and second A-D converters, respectively, and a ratio of the output of the second A-D converter to the output of the first A-D converter is calculated to be used as a measured value, the effect of the noise in the light source on the measured value will be greatly reduced, even in a case where a liquid sample is irradiated with the exciting light in a short time.

According to an aspect of the present invention, there is provided a fluorophotometer for use automatic equipment of chemical analysis which fluorophotometer includes a reaction vessel train moving apparatus for moving a train of reaction vessels at a predetermined time interval so that the reaction vessels are successively placed at a light measuring position, an optical system on the exciting light side, an optical system on the fluorescence side, a comparator for comparing the output signal of a photodetector for detecting fluorescence with a reference signal, a plurality of amplifiers having different amplification factors for amplifying the output signal of the fluorescence detecting photodetector, switches connected to the amplifiers on a one-to-one basis, and a control device for selecting one of the switches in accordance with the output of the comparator to operate an appropriate one of the amplifiers, thereby shortening a measuring time.

In more detail, the output signal of the fluorescence detecting photodetector is usually applied to a pre-amplifier, and an A-D converter is provided between the pre-amplifier and a computer which serves as the control device. It is desirable that the A-D converter is small in the number of bits. In order that the fluorophotometer has a dynamic range of $10^5$, a plurality of amplifiers having different amplification factors are connected in parallel between the pre-amplifier and the A-D converter, and one of the amplifiers is selected by a switch in accordance with the detected intensity of fluorescence. Since it is required to measure fluorescence in a short time, one of the amplifiers has to be selected rapidly. Accordingly, the output of the pre-amplifier is applied to the comparator at the beginning of the measurement of fluorescence, to be compared with the reference voltage, and the result of comparison is supplied to the computer. Thus, the computer turns on one of the switches so that the amplifier suited for the intensity level of fluorescence is selected. Hence, the amplifier having an appropriate amplification factor can be selected without using the A-D converter, that is, one of the amplifiers can be selected very rapidly.

BRIEF DESCRIPTION OF THE DRAWINGS

Fig. 1 is a plan view showing an inventive fluorophotometer for use in automatic equipment of chemical analysis.

Fig. 2 is a block diagram showing the circuit configuration of an embodiment of the fluorophotometer of Fig. 1.

Fig. 3 is a waveform shart showing the operations of main parts of the embodiment of Fig. 2.

Fig. 4 is a flow chart showing the operation of the embodiment of Fig. 2.

Fig. 5 is a graph showing the drift of the fluorophotometer.

Fig. 6 is a waveform chart which shows the noise of the fluorophotometer recorded an analog recorder.

Fig. 7 is a graph showing the drift of a photomultiplier for a case where the photomultiplier is continuously irradiated with light and the drift of the photomultiplier for a case where the photomultiplier is intermittently irradiated with light.

DESCRIPTION OF THE PREFERRED EMBODIMENT

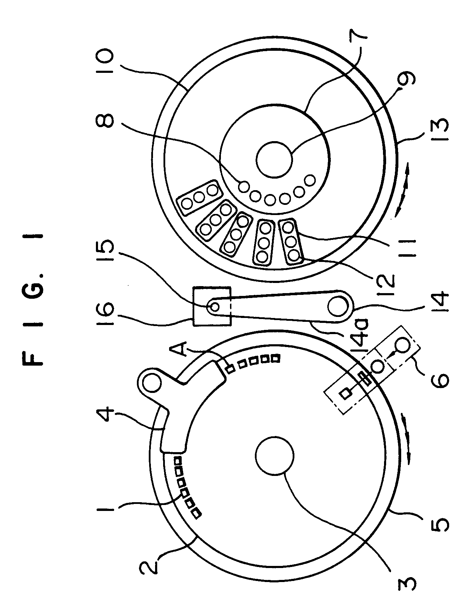

Fig. 1 shows automatic equipment of chemical analysis for clinical examination which equipment includes a fluorophotometer according to present invention.

Referring to Fig. 1, a plurality of reaction vessels 1 are arranged on a rotational reaction disk 2 along the circumference thereof at regular intervals, and the reaction disk 2 is intermittently caused to rotate on a driving axis 3 by a driving mechanism. In more detail, each time the reaction disk 2 is rotated, the reaction vessels 1 are moved by an amount corresponding to the distance between adjacent reaction vessels (that is, the pitch of the reaction vessels) or an integral multiple of the distance between adjacent reaction vessels. Since the fluorescence passing through the reaction vessels 1 is measured, the reaction vessels 1 are made of transparent glass or aclylic resin. The fluorescence measuring position (that is, light measuring position) of a fluorophotometer 6 is set in a thermostat 5 for the reaction vessels.

The fluorophotometer 6 includes a plurality of photodectors to detect different wavelength components simultaneously, and has a structure that the reaction vessel 1 placed at the light measuring point on the reaction disk 2 is irradiated with the exciting light from a light source (for example, a lamp). That is, the exciting light having a predetermined wavelength illuminates a liquid sample in the reaction vessel from above or under the reaction vessel. The fluorescence emitted from the liquid sample passes through the side wall of the reaction vessel, and a predetermined wavelength component of the fluorescence is detected by a photomultiplier. Such an optical system of the fluorophotometer is well known. The reaction vessels 1 are successively placed at the light measuring position by the intermittent rotation of the reaction disk 2, and the intensity of fluorescence emitted from a liquid sample in each reaction vessel is measured by the fluorophotometer 6. An output signal which is delivered from the fluorophotometer 6 and corresponds to the predetermined wavelength component, is selected by a multiplexer, and the selected signal is applied to a central processing unit through an A-D converter, to be stored in a random access memory.

Reagent vessels 12 are arranged on a reagent disk 10 in such a manner that the reagent vessels are separated into a plurality of reagent vessel groups 11 each made up of a first reagent vessel, a second reagent vessel and so on. Further, sample vessels 8 are arranged on a sample disk 7 along the circumference thereof. The reagent disk 10 and the sample disk 7 turn on a driving axis 9 in the following manner. Each time the reagent disk 10 or sample disk 7 is rotated, the reagent vessel groups 11 or sample vessels 8 are moved by an amount corresponding to the distance between adjacent reagent vessel groups or adjacent sample vessels, or an amount corresponding to a predetermined integral multiple of the above distance. The reagent vessel 12 and the sample vessel 8 are mounted or demounted independently of each other, in accordance with a substance to be analyzed. The sample vessels 8 are placed in a sample thermostat (not shown) to keep samples in the sample vessels 8 at a predetermined temperature, and the reagent vessel groups 11 are placed in a reagent refrigerator 13 to keep reagents at a low temperature.

A pipetting mechanism 14 is used for transferring a liquid sample or liquid standard sample from a sample vessel 8 to a reaction vessel 1 and for transferring a reagent from a reagent vessel 12 to a reaction vessel 1. The pipetting mechanism 14 has a rotatable arm 14a, and the arm 14a is provided with a probe 15 at the end thereof. The probe 15 sucks the liquid sample or reagent from the sample vessel 8 or reagent vessel 12. After the arm 14a has been rotated, the probe 15 discharges the liquid sample or reagent in the reaction vessel 1 placed at a discharge position A. In this case, each of the sample disk 7 and the reagent disk 10 is rotated so that the sample vessel 8, from which the liquid sample is sucked by the probe 15, and the reagent vessel 12, from which the reagent is sucked by the probe 15, are placed on the trajectory of the probe 15.

In more detail, a predetermined quantity of liquid sample is sucked from the sample vessel 8 on the sample disk 7 by the probe 15, and is then discharged in the reaction vessel 1 placed at the discharge position A on the reaction disk 2. Thereafter, the probe 15 is sufficiently washed by a probe cleaning device 16, to prevent the contamination of the probe 15 due to the carryover of the liquid sample. Incidentally, reference numeral 4 in Fig. 1 designates a reaction vessel cleaning part.

Next, the reaction disk 2 is rotated clockwise by an amount corresponding to the distance between adjacent reaction vessels. Further, the sample disk 7 is rotated so that the next sample vessel is placed at a pipetting position. By repeating the above operation, the liquid sample is injected into each of a predetermined number of reaction vessels. Then, a reagent is sucked from one reagent vessel 12 of a reagent vessel group 11 by the probe 15 of the pipetting mechanism 14, and is then discharged in a reaction vessel. Reagents in a plurality of reagent vessels belonging to one reagent vessel group are successively injected into the reaction vessel. By rotating the reaction disk 2, the reagents can be injected into each of the predetermined number of reaction vessels. That is, not only the liquid sample but also the reagents are injected into the reaction vessels 1 by batch processing.

As mentioned above, an analytical operation proceeds in such a manner that the reaction disk 2 is intermittently rotated. At the end of the analytical operation, a color reagent is sucked from a reagent vessel belonging to the reagent vessel group by the probe 15 of the pipetting mechanism 14, and is then discharged in the reaction vessel 1 placed at the discharge position A. Thus, color reaction proceeds in this reaction vessel. When this reaction vessel is moved to the light measuring position, the exciting light impinges on the reaction vessel from under the reaction vessel, and the fluorescence passing through the side wall of the reaction vessel is measured.

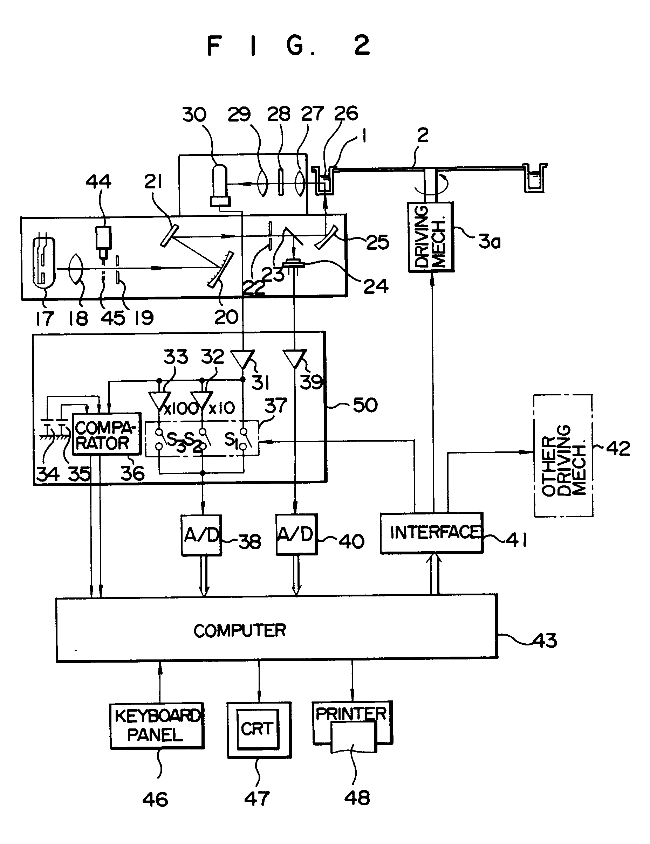

Now, an embodiment of the fluorophotometer 6 will be explained below in detail, with reference to Fig. 2. Referring to Fig. 2, light emitted from a light source 17 (for example, a metal halide lamp) passes through a lens 18 and an entrance slit 19, and is then separated by a concave diffraction grating 20 into spectral components, which are reflected from a mirror 21 so as to be directed to an exit slit 22. About one percent of the monochromatic light from the exit slit 22 is reflected from a semi-transparent mirror 23, to be received by a semiconductor detector 24 for monitoring exciting light. The greater part of the monochromatic light from the exit slit 22 passes through the semi-transparent mirror 23, and is then reflected from a toroidal concave mirror 25 in a direction perpendicular to the incident direction, to impinge on a measured sample 26 contained in one of the reaction vessels 1 which are arranged on the reaction disk 2 along the circumference thereof. That is, the measured sample 26 is irradiated with exciting light. Thus, the measured sample 26 in the reaction vessel 1, that is, the liquid sample having reacted with a reagent emits fluorescence which is secondary light. The fluorescence passing through the side wall of the reaction vessel 1 is collimated by a lens 27, and then impinges on an interference filter 28. Monochromatic light emerging from the filter 28 is focused by a lens 29 on the photoelectric conversion surface of a photomultiplier 30. A photo-current from the photomultiplier 30 is converted by a pre-amplifier 31 into a voltage. The output voltage of the pre-amplifier 31 is applied to an amplifier 32 having an amplification factor of 10 (ten), an amplifier 33 having an amplification factor of 100 (one hundred), and a comparator 36. In the comparator 36, the output voltage of the pre-amplifier 31 is compared with two reference voltages 34 and 35. A multiplexer 37 included in a sensitivity selection unit 50 is made up of three switches $S_1$, $S_2$ and $S_3$, which are connected to the pre-amplifier 31, the amplifier 32 and the amplifier 33, respectively. The output of the multiplexer 37 is converted by an A-D converter 38 into a digital signal, and a computer 43 takes in the digital signal.

While, a photo-current from the semiconductor detector 24 for monitoring exciting light is converted by a pre-amplifier 39 into a voltage. The output voltage of the pre-amplifier 39 is converted by an A-D converter 40 into a digital signal, and the computer 43 takes in the digital signal.

The comparator 36 compares the output voltage of the pre-amplifier 31 with the reference voltages 34 and 35, and sends the result of comparison to the computer 43. In more detail, the comparator 36 includes first and second comparator circuits, which are applied with the reference voltages 34 and 35, respectively. When the output voltage of the pre-amplifier 31 is greater than both of the reference voltages 34 and 35, a signal "11" is sent from the comparator 36 to the computer 43. When the output voltage of the pre-amplifier 31 is smaller than both of the reference voltages 34 and 35, a signal "00" is sent to the computer 43. When the output voltage of the pre-amplifier 31 lies between the reference voltages 34 and 35, a signal "01" is sent to the computer 43. The computer 43 turns on one of the switches $S_1$, $S_2$ and $S_3$ on the basis of the result of comparison given from the comparator 36. Further, the computer 43 can control a reaction disk driving mechanism 3a through an interface 41. The computer 43 can also control driving mechanisms for the reagent disk, the pipetting mechanism and others, through the interface 41.

A shutter 45 is disposed between the lens 18 and the entrance slit 19 to block the light emitted from the light source 17, and is driven by a solenoid 44 under control of the computer 43. Further, the fluorophotometer (namely, present embodiment) is provided with not only a keyboard panel 46 for inputting analytical conditions and information on the selection of requested items, but also a CRT display 47 and a printer 48 for displaying or recording analytical results and others.

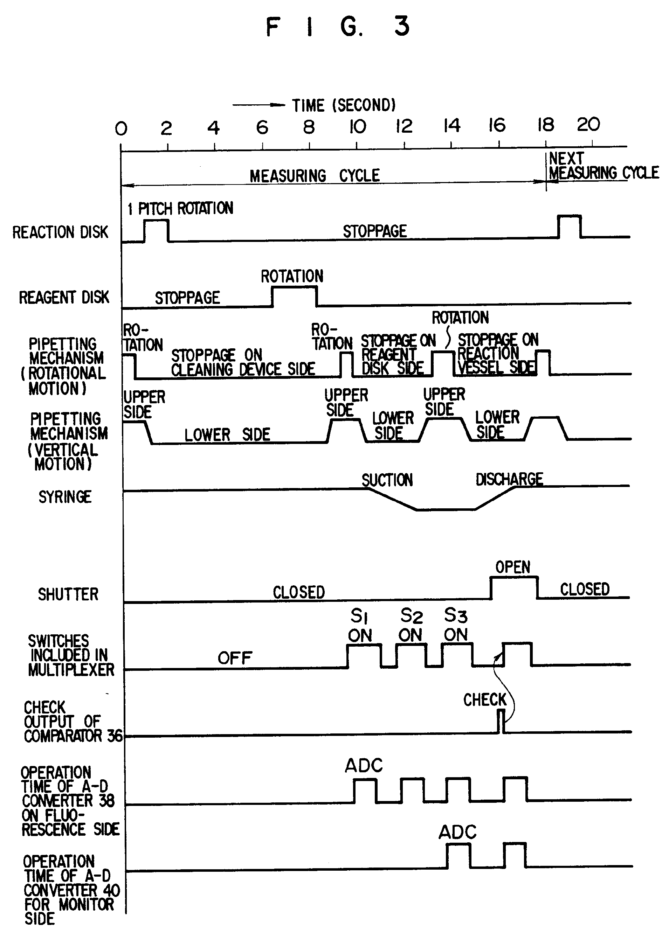

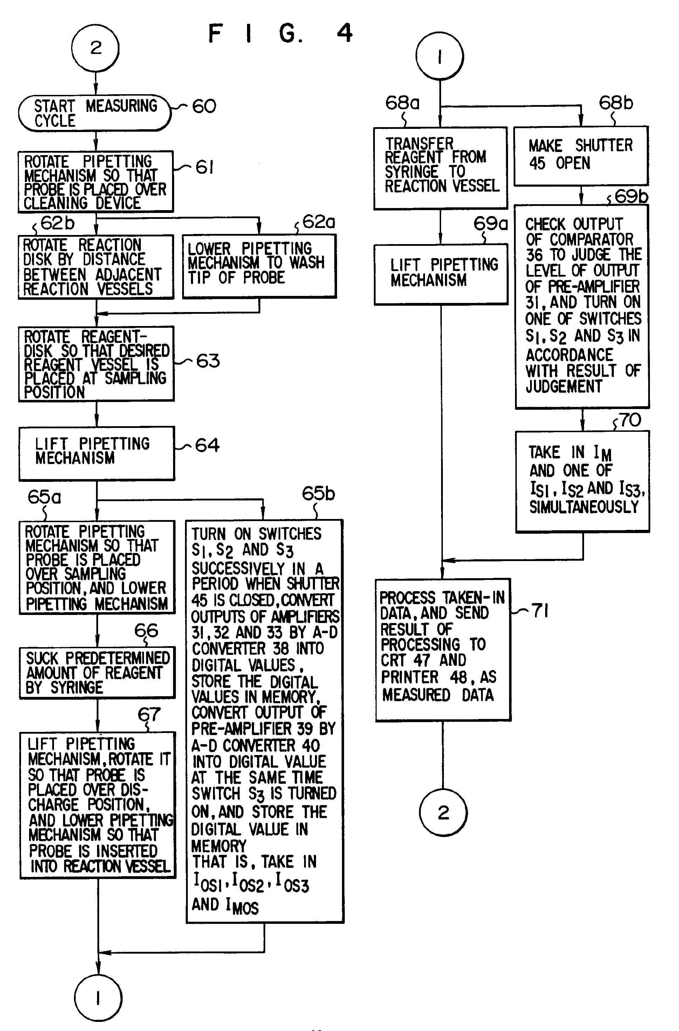

Next, explanation will be made of the operation of the embodiment of Fig. 2, with reference to Figs. 3 and 4. In the present embodiment, a measuring operation is performed on an 18-second cycle. An example of one measuring cycle will be explained below in detail. A measuring cycle is started in step 60. In step 61, the pipetting mechanism 14 is rotated so that the probe 15 is placed over the cleaning device 16. Then, the pipetting mechanism 14 is lowered to wash the tip of the probe 15 by the cleaning device 16 (step 62a). In parallel with the processing in the step 62a, the processing in step 62b is carried out. That is, when a time of 1 sec has elapsed after the beginning of the cycle, the reaction disk 2 is rotated for a time of 1 sec by an amount corresponding to the distance between adjacent reaction vessels. When a time of 6.5 sec has elapsed after the beginning of the cycle, the reagent disk 10 is rotated so that a desired reagent vessel is placed at a reagent pipetting position (step 63). Then, the pipetting mechanism 14 is lifted (step 64). Next, the pipetting mechanism is rotated so that the probe is placed over the reagent pipetting position, and is then lowered (step 65a). A predetermined quantity of reagent is sucked from the reagent vessel by a syringe (step 66). Thereafter, the pipetting mechanism 14 is lifted, and then rotated so that the probe is placed over the discharge position. The pipetting mechanism 14 is lowered so that the probe is inserted in the reaction vessel on the discharge position (step 67). The reagent in the syringe is injected into the reaction vessel (step 68a). Then, the pipetting mechanism 14 is lifted (step 69a).

While, the shutter 45 of the present embodiment is made open during a period between a time when 16 seconds have elapsed from the beginning of the cycle and a time when 18 seconds have elapsed from the beginning of the cycle, and is closed during the remaining period of the cycle. In the period when the shutter 45 is closed, the processing in step 65b is carried out in parallel with the processing in the steps 65a, 66 and 67. That is, in the step 65b, the switches $S_1$, $S_2$ and $S_3$ of the multiplexer 37 are turned on in this order, and thus the output voltages of the pre-amplifier 31 and the amplifiers 32 and 33 are successively converted by the A-D converter 38 into digital signals, which are supplied to the computer 43, to be stored in a memory incorporated in the computer 43. Further, at the same time as the switch $S_3$ is turned on, the output voltage of the pre-amplifier 39 is converted by the A-D converter 40 into a digital signal, which is stored in the memory of the computer 43. Each of the digital signals from the A-D converter 38 corresponds to the sum of signal components which are generated on the basis of the dark current of the photomultiplier 30, the offset current or voltage of each of the amplifiers 31, 32 and 33, and the stray radiation incident on the photomultiplier 30, in the period when the shutter 45 is closed. Now, let us express the digital values corresponding to the output voltages of the pre-amplifier 31, the amplifier 32 and the amplifier 33 by $I_{OS1}$, $I_{OS2}$ and $I_{OS3}$, respectively. Further, the digital signal from the A-D converter 40 corresponds to the sum of signal components which are generated on the basis of the dark current of the semiconductor detector 24, the offset current or voltage of the pre-amplifier 39 and the stray radiation incident on the semiconductor detector 24, in the period when the shutter 45 is closed. Let us express the digital value corresponding to the output voltage of the pre-amplifier 39 by $I_{MOS}$.

When a time of 16 sec has elapsed after the beginning of the cycle, the shutter is made open (step 68b). The computer 43 judges the level of the output voltage of the pre-amplifier 31 on the basis of the output signal of the comparator 36, to select an appropriate one of the switches $S_1$, $S_2$ and $S_3$, thereby using the output of a corresponding one of the pre-amplier 31, amplifier 32 and amplifier 33 (step 69b). The computer 43 takes in the digital signal corresponding to the selected switch and the digital signal corresponding to the output of the pre-amplifier 39 at the same time (step 70). Now, let us express the value of the digital signal at a time the switch $S_1$ is selected (that is, strong fluorescence is generated) by $I_{S1}$. Similarly, the value of the digital signal at a time the switch $S_2$ is selected, is expressed by $I_{S2}$, and the value of the digital signal at a time the switch $S_3$ is selected, is expressed by $I_{S3}$. Also, let us express the value of the digital signal corresponding to the output of the pre-amplifier 39 by $I_M$. Further, let us express the intensity of fluorescence obtained at a time the switch $S_1$ is se-

lected, by $F_1$. Similarly, the intensity of fluorescence obtained at a time the switch $S_2$ is seelected, is expressed by $F_2$, and the intensity of fluorescence obtained at a time the switch $S_3$ is selected, is expressed by $F_3$. In step 71, the values $F_1$, $F_2$ and $F_3$ are calculated from the following equations:

$$F_1 = (I_{S1} - I_{OS1})/(I_M - I_{MOS})$$
$$F_2 = (I_{S2} - I_{OS2})/(I_M - I_{MOS}) \cdot (10)$$
$$F_3 = (I_{S3} - I_{OS3})/(I_M - I_{MOS}) \cdot (100)$$

The intensities of fluorescence of a multiplicity of measured samples can be successively determined in the above-mentioned manner. In automatic analysis, standard samples containing a desired substance at predetermined concentrations are previously analyzed in the above-mentioned manner, to obtain a working curve, and the substance content of an unknown sample is measured by the present embodiment and determined on the basis of the working curve.

Fig. 5 is a graph showing the drift of the present embodiment after a time when 30 minutes have elaspsed from the start of operation of the present embodiment. In Fig. 5, a curve A indicates the variation of a signal indicative of fluorescence with time. That is, the drift indicated by the curve A is caused by the drift of the light source, the drift of the dark current and sensitivity of the photomultiplier 30, and the drift of the offset current or voltage of the pre-amplifier 31, and other drift. In Fig. 5, a curve B indicates the time variation of a ratio of the signal indicative of fluorescence to a monitor signal indicative of exciting light. Further, a curve C in Fig. 5 indicates the time variation of the intensity of fluorescent obtained by the measuring method according to the present invention. That is, the intensity of fluorescence is measured in such a manner that the shutter 45 is kept open for a time of 1.5 seconds at intervals of 18 seconds and is closed for the remaining period (that is, a time of 16.5 sec), the dark current of each of the photomultiplier 30 and semiconductor detector 24, the offset current or voltage of each of the pre-amplifiers 31 and 39, and others are measured in a period when the shutter is closed, to correct the fluorescence indicating signal and the monitor signal, and a ratio of the corrected fluorescence indicating signal to the corrected monitor signal is calculated to obtain the intensity of fluorescence. The intensity of fluorescence thus obtained varies with time as indicated by the curve C in Fig. 5. As is apparent from Fig. 5, the curve A indicates a drift of about 2% per one hour, the curve B a drift of about 0.8% per one hour, and the curve C a drift of 0.5% or less per one hour.

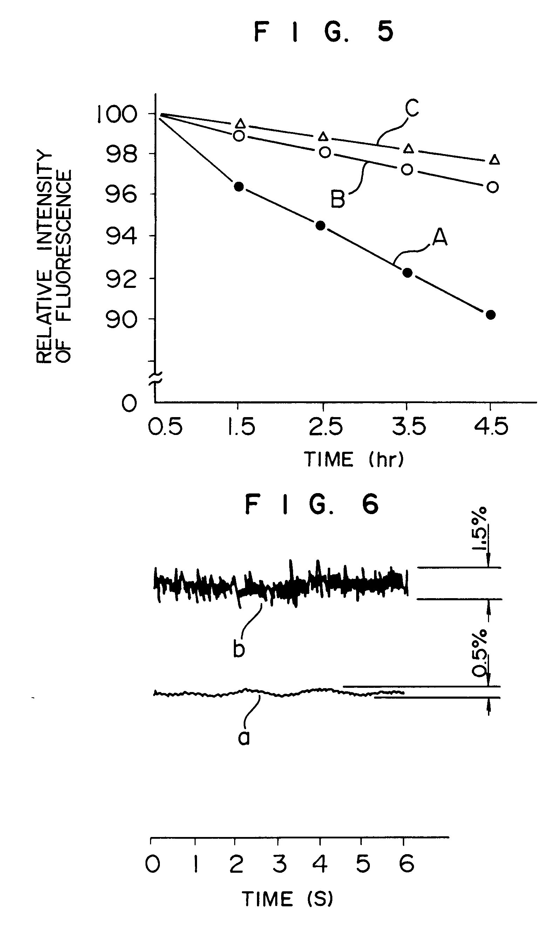

Fig. 6 shows noise in the present embodiment. In Fig. 6, a waveform $\underline{a}$ shows the exciting-light monitoring signal recorded by an analog recorder, and a waveform $\underline{b}$ shows the fluorescence indicating signal recorded by the analog recorder. As can be seen from the comparison of the waveform $\underline{a}$ with the waveform b, both high-frequency noise and low-frequency noise having a period of 1 to 2 seconds are generated in the present embodiment. The high-frequency noise appearing in the waveform b is based upon the noise in the photomultiplier for detecting fluorescence. The low-frequency noise has the same period in the waveforms a and b, and thus it is considered that the low-frequency noise is generated on the basis of the fluctuation of discharge in a discharge tube used as the light source. When the fluorescence indicating signal and the exciting-light monitoring signal are successively converted by a single A-D converter into first and second digital signals, respectively, in such a manner that each of conversing operations is performed for a time of one second, and a ratio of the first digital signal to the second digital signal is calculated, the ratio thus obtained will not be affected by the high-frequency noise, since the high-frequency noise is averaged in a time of one second. The above ratio, however, is greatly affected by the low-frequency noise, since the low-frequency noise in a conversion time differs from the low-frequency noise in the next conversion time. According to the present embodiment, the fluorescence indicating signal and the exciting-light monitoring signal are simultaneously converted by respective A-D converters into first and second digital signals, and a ratio of the first digital signal to the second digital signal is calculated. The ratio thus obtained will not be affected by the low-frequency noise. It has been confirmed by experiments that a variation of 0.5% in the above ratio is generated in a case where the fluorescence indicating signal and the exciting-light monitoring signal are successively converted by a single A-D converter into the digital signals, but a variation in the ratio becomes less than 0.1% in a case where the fluorescence indicating signal and the exciting-light monitoring signal are simultaneously converted by respective A-D converters into the digital signals.

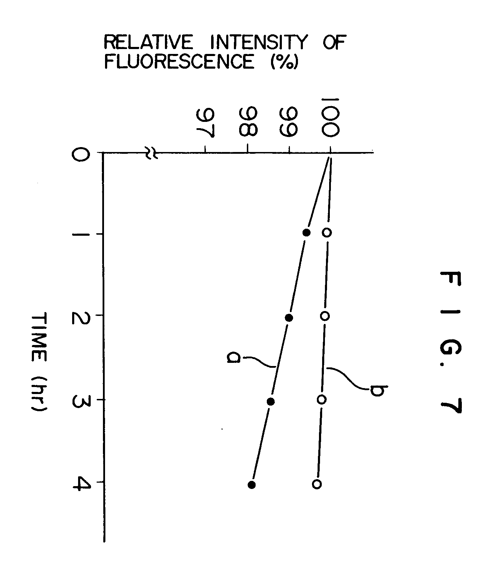

The photomultiplier 30 included in the present embodiment for detecting fluorescence can deliver an output current from the anode thereof in a range from $1 \times 10^{-8}$ to $1 \times 10^{-5}$ A. When the electric circuit of the present embodiment is so constructed as to be able to detect the intensity of fluorescence equal to one-hundredth the intensity of fluorescence corresponding to an output current of $10^{-8}$ A, the present embodiment will have a dynamic range of $10^5$. When the intensity of fluorescence incident on the photomultiplier is high, a current of $10^{-5}$ A flows through the photomultiplier. Referring to Fig. 7, a curve a shows the drift of the photomultiplier in a case where fluorescence corresponding to an output current of $1 \times 10^{-5}$ A impinges on the photomultiplier continuously, and a curve b shows the drift of the photomultiplier in a case where the above fluorescence impinges on the photomultiplier for a time of 1.5 seconds at intervals of 18 seconds. As can be seen from Fig. 7, the curve a indicates a drift of about 2% per four hours, and the curve b indicates a drift less than 0.3% per four hours. As is evident from the above, the drift of the photomultiplier can be reduced by irradiating the photomultiplier with fluorescence only when the intensity of fluorescence is measured. However, in order to average noise in the photomultiplier and to stabilize the operation thereof, it is necessary to operate the photomultiplier for a time of about one second. In the present embodiment, when a time of 0.5 seconds has elapsed after the shutter 45 was made open, the amplified output of the photomultiplier is converted into a digital signal for a time of one second. That is, the fluorescence impinges on the photomultiplier only for a time of 1.5 seconds, and thus the drift thereof can be reduced.

In order to cover a dynamic range of $10^5$ by a single A-D converter, the A-D converter is required to have $2^{18}$ bits or more. An A-D converter having such a large number of bits is not available on the market, and hence is very expensive. The A-D converter 38 of the present embodiment is an 18-bit converter of the integration type available on the market. In order to attain a dynamic range of $10^5$ by using the 18-bit converter, a plurality of amplifiers having different amplification factors are used. In more detail, one of three amplifiers having amplification factors 1, 10 and 100 is selected in accordance with the intensity of fluorescence emitted from a measured sample. One of three amplifiers is not selected on the basis of the output of the A-D converter 38, but is instantaneously selected in accordance with the output of the converter 36, to eliminate an A-D conversion time in slecting one of three amplifiers, thereby shortening a measuring time. Thus, the present embodiment becomes low in manufacturing cost, and can measure fluorescence in a wide intensity range. Moreover, one of three amplifiers is instantaneously selected. Thus, a measuring time is reduced, and a period when the shutter 45 is made open, is shortened.

## Claims

1. A fluorophotometer for use in automatic equipment of chemical analysis, comprising:
   a reaction vessel train moving device (2, 3, 3a) for moving a train of reaction vessels (1) at a predetermined time interval so that the reaction vessels are successively placed at a light measuring point (A);
   an optical system (17 to 22, 25) on the exciting light side for irradiating the reaction vessels placed at the light measuring position with exciting light;
   an optical system (27 to 29) on the fluorescence side for detecting fluorescence by a first photodetector (30), the fluorescence being emitted from a measured sample (26) contained in the reaction vessel placed at the light measuring position;
a shutter (45) disposed in the optical system on the exciting light side for blocking the optical path of exciting light;
a shutter driving device (44) for driving the shutter so that the shutter is kept at a state that the optical path of exciting light is blocked and then kept at a state that the optical path of exciting light is made open, each time the train of reaction vessels is moved; storage means (65b) for storing a first output signal which is delivered from the first photodetector (30) in a period when the optical path of exciting light is blocked and outputs of the first and second A-D converters substantially at the same time; a processor (43) for correcting a second output signal which is delivered from the first photodetector in a period when the optical path of exciting light is made open, by the first output signal stored in the storage means, to obtain measured data; comprising
further a comparator (36) for comparing the output signal of the first photodetector with a reference signal, a plurality of amplifiers (31, 32, 33) having different amplification factors for amplifying the output signal of the first photodetector, a plurality of switches (S$_1$, S$_2$, S$_3$) connected to the amplifiers on a one-to-one basis, selection means (41, 37) for selecting one of the switches in accordance with the output signal of the comparator (36) to operate an appropriate one of the amplifiers, and means (71) including in the processor (43) for correcting the measured data in accordance with the amplification factor of the amplifier selected by the selection means.

## Patentansprüche

1.  Fluorophotometer zur Verwendung in automatischen Geräten der chemischen Analyse, aufweisend:
    eine Vorrichtung (2, 3, 3a) zum Bewegen einer Folge von Reaktionsgefäßen (1) mit einem vorbestimmten Zeitintervall, so daß die Reaktionsgefäße nacheinander an einem Lichtmeßpunkt (A) plaziert werden;
    ein optisches System (17 bis 22, 25) auf der Anregungslichtseite, zur Bestrahlung der in der Lichtmeßposition plazierten Reaktionsgefäße mit anregendem Licht;
    ein optisches System (27 bis 29) auf der Fluoreszenzseite zur Erfassung der Fluoreszenz durch einen ersten Photodetektor (30), wobei die Fluoreszenz von einer gemessenen Probe (26) emittiert wird, die in dem am Lichtmeßpunkt plazierten Reaktionsgefäß enthalten ist; ein Verschluß (45), der im optischen System auf der Anregungslichtseite angeordnet ist, um den optischen Pfad des Anregungslichtes zu sperren;
eine Verschlußantriebsvorrichtung (44) zum Antreiben des Verschlusses, derart, daß der Verschluß in einem Zustand gehalten wird, bei dem der optische Pfad für das Anregungslicht gesperrt und dann in einem Zustand gehalten wird, bei dem der optische Pfad für das Anregungslicht geöffnet wird, und zwar jedesmal, wenn die Folge der Reaktionsgefäße bewegt wird;
eine Speichereinrichtung (65b) zum Speichern eines ersten Ausgangssignals, das vom ersten Photodetektor (30) in einer Periode geliefert wird, wenn der optische Pfad für das Anregungslicht gesperrt ist, und im wesentlichen gleichzeitig von Ausgaben des ersten und des zweiten A/D-Wandlers;
einen Prozessor (43) zum Korrigieren eines zweiten Ausgangssignals, das vom ersten Photodetektor in einer Periode geliefert wird, wenn der optische Pfad für das Anregungslicht durch das erste Ausgangssignal geöffnet ist, das in der Speichereinrichtung gespeichert ist, um gemessene Daten zu erhalten; weiter aufweisend:
einen Komparator (36) zum Vergleichen des Ausgangssignals des ersten Photodetektors mit einem Bezugssignal; eine Vielzahl von Verstärkern (31, 32, 33), die unterschiedliche Verstärkungsfaktoren zum Verstärken des Ausgangssignals des ersten Photodetektors aufweisen; eine Vielzahl von Schaltern (S$_1$, S$_2$, S$_3$), die an die Verstärker auf einer eins-zu-eins-Basis angeschlossen sind; Wähleinrichtungen (41, 37) zum Wählen eines der Schalter gemäß dem Ausgangssignal des Komparators (36), um einen der Verstärker zu betreiben; und eine Einrichtung (71), die im Prozessor (43) zum Korrigieren der gemessenen Daten gemäß dem Verstärkungsfaktor des von den Wähleinrichtungen gewählten Verstärkers enthalten ist.

## Revendications

1.  Fluorophotomètre destiné à être utilisé dans un équipement automatique d'analyse chimique, comprenant :
    un dispositif (2,3,3a) de déplacement d'un train d'enceintes réactionnelles servant à déplacer un train d'enceintes réactionnelles (1) à un intervalle de temps prédéterminé de sorte que les enceintes réactionnelles sont placées successivement en un point (A) de mesure de la lumière;
    un système optique (17 à 22, 25) situé du côté de la lumière d'excitation pour irradier les enceintes réactionnelles placées dans la position de mesure de la lumière, avec une lumière d'excitation;
    un système optique (27 à 29) situé du côté de lafluorescence pour détecter la fluorescence au moyen d'un premier photodétecteur (30), la fluorescence étant émise par un échantillon mesuré (26) contenu dans l'enceinte réactionnelle placée dans la position de mesure de la lumière;

un obturateur (45) disposé dans le système optique du côté de la lumière d'excitation pour bloquer le trajet optique de la lumière d'excitation;

un dispositif (44) d'entraînement de l'obturateur pour entraîner l'obturateur de telle sorte que ce dernier est maintenu dans un état dans lequel le trajet optique de la lumière d'excitation est interrompu, puis est maintenu dans un état dans lequel le trajet optique d'excitation est ouvert, chaque fois que le train d'enceintes réactionnelles est déplacé;

des moyens de mémoire (65b) pour mémoriser sensiblement en même temps un premier signal de sortie qui est délivré par le premier photodétecteur (30) pendant une période, pendant laquelle le trajet optique de la lumière d'excitation est bloqué, et des signaux de sortie des premier et second convertisseurs analogique/numérique;

un processeur (43) pour corriger un second signal de sortie, qui est délivré par le premier photodétecteur pendant la période pendant laquelle le trajet optique de la lumière d'excitation est ouvert, au moyen du premier signal de sortie mémorisé dans les moyens de mémoire, pour obtenir des données mesurées;

comprenant en outre un comparateur (36) pour comparer le signal de sortie du premier photodétecteur à un signal de référence, une pluralité d'amplificateurs (31,32,33) possédant des facteurs d'amplification différents pour amplifier le signal de sortie du premier photodétecteur, une pluralité d'interrupteurs ($S_1$, $S_2$, $S_3$) raccordés de façon biunivoque aux amplificateurs, des moyens de sélection (41,37) pour sélectionner l'un des interrupteurs en fonction du signal de sortie du comparateur (36) pour activer l'un approprié des amplificateurs, et des moyens (71) contenus dans le processeur (43) pour corriger des données mesurées en fonction du facteur d'amplification de l'amplificateur sélectionné par les moyens de sélection.

F I G. I

# F I G. 2

# F I G. 3

# F I G. 4

(2)

START MEASURING CYCLE ~60

ROTATE PIPETTING MECHANISM SO THAT PROBE IS PLACED OVER CLEANING DEVICE ~61

62b — ROTATE REACTION DISK BY DISTANCE BETWEEN ADJACENT REACTION VESSELS

62a — LOWER PIPETTING MECHANISM TO WASH TIP OF PROBE

ROTATE REAGENT-DISK SO THAT DESIRED REAGENT VESSEL IS PLACED AT SAMPLING POSITION ~63

LIFT PIPETTING MECHANISM ~64

65a — ROTATE PIPETTING MECHANISM SO THAT PROBE IS PLACED OVER SAMPLING POSITION, AND LOWER PIPETTING MECHANISM

65b — TURN ON SWITCHES $S_1$, $S_2$ AND $S_3$ SUCCESSIVELY IN A PERIOD WHEN SHUTTER 45 IS CLOSED, CONVERT OUTPUTS OF AMPLIFIERS 31, 32 AND 33 BY A-D CONVERTER 38 INTO DIGITAL VALUES, STORE THE DIGITAL VALUES IN MEMORY, CONVERT OUTPUT OF PRE-AMPLIFIER 39 BY A-D CONVERTER 40 INTO DIGITAL VALUE AT THE SAME TIME SWITCH $S_3$ IS TURNED ON, AND STORE THE DIGITAL VALUE IN MEMORY THAT IS, TAKE IN $I_{OS1}$, $I_{OS2}$, $I_{OS3}$ AND $I_{MOS}$

SUCK PREDETERMINED AMOUNT OF REAGENT BY SYRINGE ~66

LIFT PIPETTING MECHANISM, ROTATE IT SO THAT PROBE IS PLACED OVER DISCHARGE POSITION, AND LOWER PIPETTING MECHANISM SO THAT PROBE IS INSERTED INTO REACTION VESSEL ~67

(1)

---

(1)

68a — TRANSFER REAGENT FROM SYRINGE TO REACTION VESSEL

68b — MAKE SHUTTER 45 OPEN

69a — LIFT PIPETTING MECHANISM

69b — CHECK OUTPUT OF COMPARATOR 36 TO JUDGE THE LEVEL OF OUTPUT OF PRE-AMPLIFIER 31, AND TURN ON ONE OF SWITCHES $S_1$, $S_2$ AND $S_3$ IN ACCORDANCE WITH RESULT OF JUDGEMENT

70 — TAKE IN $I_M$ AND ONE OF $I_{S1}$, $I_{S2}$ AND $I_{S3}$, SIMULTANEOUSLY

PROCESS TAKEN-IN DATA, AND SEND RESULT OF PROCESSING TO CRT 47 AND PRINTER 48, AS MEASURED DATA ~71

(2)

# F I G. 5

# F I G. 6

F I G. 7